(19) Europäisches Patentamt
European Patent Office
Office européen des brevets

(11) **EP 4 647 201 A1**

(12) **EUROPEAN PATENT APPLICATION**
published in accordance with Art. 153(4) EPC

(43) Date of publication:
**12.11.2025  Bulletin 2025/46**

(21) Application number: **23927642.1**

(22) Date of filing: **25.12.2023**

(51) International Patent Classification (IPC):
**B23K 13/08** (2006.01)     **B23K 13/00** (2006.01)

(52) Cooperative Patent Classification (CPC):
**B23K 13/00; B23K 13/08**

(86) International application number:
**PCT/JP2023/046526**

(87) International publication number:
**WO 2024/190040 (19.09.2024 Gazette 2024/38)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **16.03.2023  JP 2023042018**

(71) Applicant: NIPPON STEEL CORPORATION
Chiyoda-ku
Tokyo 100-8071 (JP)

(72) Inventors:
• **HIROTA, Yoshiaki**
  Tokyo 100-8071 (JP)
• **TANIMOTO, Michitoshi**
  Tokyo 100-8071 (JP)
• **IMANISHI, Akira**
  Tokyo 100-8071 (JP)

(74) Representative: **Vossius & Partner
Patentanwälte Rechtsanwälte mbB**
Siebertstrasse 3
81675 München (DE)

(54) **MANDREL EQUIPPED WITH IMPEDER DEVICE, ELECTRIC RESISTANCE WELDED TUBE MANUFACTURING DEVICE, AND MANUFACTURING METHOD OF ELECTRIC RESISTANCE WELDED TUBE**

(57)   An object of the present invention is to properly control deterioration and damage of an impedance device for manufacturing an electric-resistance welded pipe due to induction heating, the resulting reduction in welding efficiency, prevention of mandrel breakage, and hindrance to production.

The mandrel and impedance device of the present invention are a mandrel and impedance device for manufacturing an electric-resistance welded pipe, which are provided inside an open pipe in which end portions melted by an induced current are welded together. An impeder core made of a magnetic material and the mandrel for manufacturing the electric-resistance welded pipe, which is located inside the impeder core, serves as a support member of the impeder core, and is extended in a predetermined direction, are included. A recessed area is formed at a part of the impeder core within a predetermined size along an extending direction of the mandrel, and a size of the recessed area in a direction orthogonal to a running direction is 20 mm or more and 1/3 of a length of an outside dimension of the mandrel or less.

FIG. 1A

INSERTION DIRECTION

FIG. 1B

**Description**

TECHNICAL FIELD

The present invention relates to a mandrel equipped with an impedance device, which is used for manufacturing an electric-resistance welded pipe, an electric-resistance welded pipe manufacturing device, and a method for manufacturing the electric-resistance welded pipe.

BACKGROUND ART

In general, methods for manufacturing a metal pipe include a method by drilling a metal billet (seamless pipe), a method by extrusion, or other methods in addition to a method in which a metal band plate is bent and welded into a tubular shape (electric-resistance welded pipe, spiral pipe, or other pipes). Among the above metal pipes, the electric-resistance welded pipes are manufactured in large quantities because they are particularly productive and inexpensive.

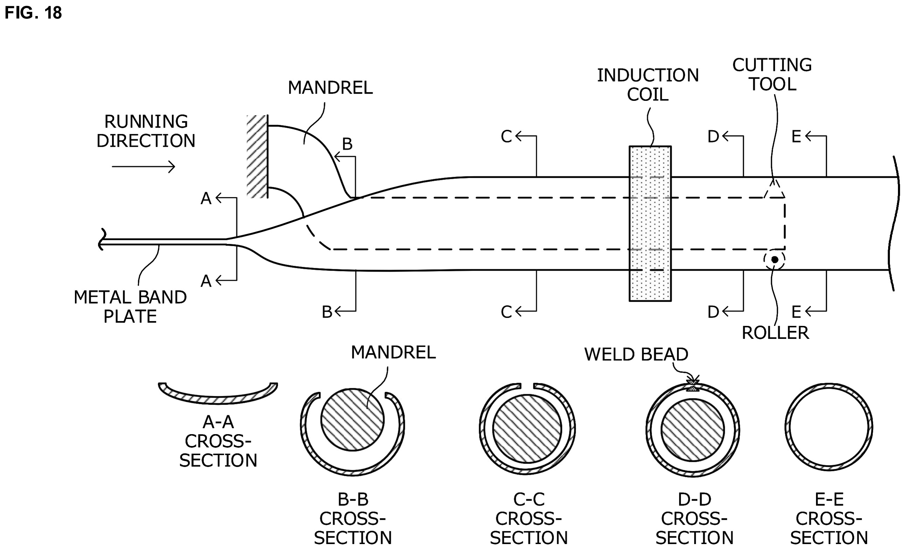

The following manufacturing method is used in the manufacturing of electric-resistance welded pipes. Such a manufacturing method is briefly explained with reference to FIG. 18. FIG 18 is an explanatory view schematically illustrating an appearance of the method for manufacturing the electric-resistance welded pipe. In FIG. 18, forming rolls are not illustrated to simplify the figure.

As illustrated in FIG. 18, a metal band plate made of steel, stainless steel, or other metals is first formed into a cylindrical shape while running to form an open pipe (see A-A cross-section to C-C cross-section in FIG. 18). At this time, a mandrel is inserted into the open pipe through an opening, as illustrated in the figure. Next, the open pipe is heated to a melting temperature by applying a high-frequency current to end face portions of the open pipe that face across the opening (hereinafter simply referred to as "end portions of the open pipe"). In this state, end faces at both end face portions of the open pipe are pressure-welded to each other using squeeze rolls (not illustrated) to form a tubular shape. As a result of welding, a weld bead is formed at a point where welding is performed, as illustrated in D-D cross-section in FIG. 18. The weld bead is removed by a cutting tool provided at a tip of the mandrel, and the electric-resistance welded pipe is finally manufactured with a shape illustrated in E-E cross-section in FIG. 18.

One method of supplying the high-frequency current to the end portion of the open pipe is to provide an induction coil (solenoid coil) along an outer circumferential surface of the open pipe, for example, as illustrated in FIG. 18 and pass a primary current through this induction coil, thereby directly generating an induced current in the open pipe. In this method, the high-frequency current of about 100 kHz to 400 kHz is generally used as the current to be supplied to the induction coil. Ferrite, electromagnetic steel, or other ferromagnetic materials called an impeder is often disposed inside the open pipe (generally, at an outer circumference of the mandrel) to block the induced current that tends to circulate around an inner circumference of the open pipe and does not take part in welding among the induced current induced by the high-frequency current (in FIG. 18, the impeder is omitted from illustration).

When the induction coil is used to generate the induced current on the surface of the open pipe as described above, a generated magnetic flux penetrates into the open pipe, resulting in a ferromagnetic field at the opening of the open pipe located directly below the induction coil. When the inside of the open pipe is subjected to the ferromagnetic field, a generated magnetic flux causes the impeder to confront magnetic flux saturation or burnout. As a result, an inner circumferential current cannot be suppressed, and a mandrel connecting inner surface bead-cutting tools may be heated by induction heating due to the inner circumferential current, causing the mandrel to rupture. If such a mandrel rupture occurs, stable operation for a long period of time becomes impossible.

Therefore, Patent Document 1 discloses a structure in which a protector can be applied to prevent burnout of an outer cylindrical pipe equipped by an impedance device as a structure to prevent breakage of the mandrel due to heating of the mandrel itself by induced current, which is caused by magnetic flux saturation or burnout of the impeder as described above. According to Patent Document 1, the protector made of semi-cylindrical ceramic is provided on an outer circumference of at least an upper half of the outer cylindrical pipe to insulate the outer cylindrical pipe and suppress occurrence of burnout accidents of the outer cylindrical pipe.

Patent Document 2 discloses a structure in which an outer circumference of a strength support member provided inside an impeder core is coated with a material with high conductivity to prevent induction heating of the strength support material. According to Patent Document 2, the strength support member is prevented from deteriorating due to induction heating without reducing a cross-sectional area of the impeder core.

PRIOR ART DOCUMENT

PATENT DOCUMENT

# EP 4 647 201 A1

Patent Document 1: Japanese Examined Utility Model Application Publication No. S59-8869
Patent Document 2: Japanese Laid-open Patent Publication No. 2001-62572

## SUMMARY OF THE INVENTION

## PROBLEMS TO BE SOLVED BY THE INVENTION

Incidentally, when the impeder is broken due to the ferromagnetic field inside the open pipe as described above (concretely, when the impeder is exposed to a magnetic field above magnetic saturation), the impeder loses its ability to suppress the inner circumferential current due to loss of magnetism and is unable to block the induced current flowing through an inner surface of the pipe. As a result, welding becomes impossible due to a significant deterioration in welding efficiency, mandrel rupture, or other reasons.

As mentioned above, the structures for suppressing the destruction of the outer cylindrical pipe provided outside the impeder and the strength support member provided inside the impeder are disclosed in Patent Documents 1 and 2, respectively. However, it is not disclosed to protect the impeder by focusing on a structure of the impeder core itself. In other words, a conventional electric-resistance welded pipe manufacturing device does not address the causes of the problem.

The present invention was made in view of the above circumstances, and an object thereof is to properly control the deterioration and damage of the impedance device for manufacturing the electric-resistance welded pipe due to induction heating, the resulting reduction in welding efficiency, prevention of mandrel breakage, and hindrance to production.

## MEANS FOR SOLVING THE PROBLEMS

The present invention is based on these circumstances and is summarized as follows.

(1) A mandrel equipped with an impedance device for manufacturing an electric-resistance welded pipe, which includes the impedance device that has an impeder core made of a magnetic material, and the mandrel that is located inside the impeder core, serves as a support member of the impeder core, and is extended in a predetermined direction, wherein a recessed area that is formed at a part of the impeder core within a predetermined size along an extending direction of the mandrel, and a size of the recessed area in a direction orthogonal to the extending direction is 10 mm or more and 1/3 or less of an outer circumferential length of the mandrel.

(2) The mandrel according to (1), wherein a length of the recessed area in the extending direction is 100 mm or more and an entire length of the impeder core or less.

(3) The mandrel according to (1) or (2), wherein the impedance device further has a hollow impeder case provided outside the impeder core to have a void between the impeder case and the impeder core, and cooling water is passed through the hollow portion of the impeder case.

(4) The mandrel according to any one of (1) to (3), wherein the recessed area is formed by at least an upper part of the impedance device is curved downward.

(5) The mandrel according to any one of (1) to (3), wherein the recessed area is a cutout portion in which at least a part of the impeder core is removed.

(6) The mandrel according to (5), wherein a surface of the mandrel is exposed at a bottom part of the recessed area.

(7) The mandrel according to (6), wherein an electromagnetic shielding material is provided at the surface of the exposed mandrel.

(8) The mandrel according to (7), wherein the electromagnetic shielding material is copper mesh.

(9) The mandrel according to any one of (6) to (8), wherein slits extending in a running direction are formed at the exposed portion of the mandrel at the bottom part of the recessed area.

(10) The mandrel according to (9), wherein a width of a metal portion where the slits are formed is smaller than a penetration depth of the induced current.

(11) The mandrel according to (9) or (10), wherein cooling water is flowed through the mandrel, and a sealing member is provided at the portion of the mandrel where the slits are formed.

(12) The mandrel according to any one of (1) to (11), wherein a through hole penetrating in a vertical direction is formed at the mandrel directly below at least a part or all of the recessed area.

(13) The mandrel according to any one of (1) to (12), wherein the impeder core is provided only at an upper half of an outer circumference of the mandrel.

(14) An electric-resistance welded pipe manufacturing device, which includes a forming roll group that forms a desired electric-resistance welded pipe shape, an induction coil that generates an induced current, and a mandrel for manufacturing an electric-resistance welded pipe extended in a predetermined direction, the device including: an impedance device, which has an impeder core made of a magnetic material, that is provided on a part of the mandrel;

and a recessed area that is formed at a part of the impeder core within a predetermined size along an extending direction of the mandrel, wherein a size of the recessed area in the extending direction is (a width of the induction coil + 100 mm) or more and an entire length of the impeder core or less, and a size of the recessed area in a direction orthogonal to the extending direction is 10 mm or more and 1/3 of an outer circumferential length of the mandrel or less.

(15) A method for manufacturing an electric-resistance welded pipe, in which end portions of an open pipe that is bent into a cylindrical shape while being conveyed in a predetermined running direction are melted by an induced current and then the end portions are butted and electric-resistance welded together, the method including: disposing the mandrel according to any one of (1) to (13) inside the open pipe so that a recessed area faces the end portions of the open pipe and at least a part of a disposed position of an induction coil for generating the induced current is included in the recessed area in an extending direction of the mandrel.

(16) The method for manufacturing the electric-resistance welded pipe according to (15), wherein in a cross-section when the open pipe, the impedance device, and the mandrel are cut in a radial direction of the open pipe, a separation distance between an upper end of the impedance device and a lower end of the end portion of the open pipe in the recessed area is larger than a separation distance between the upper end of the impedance device and the lower end of the end portion of the open pipe at an upstream side of the recessed area in the running direction.

(17) The method for manufacturing the electric-resistance welded pipe according to (15) or (16), wherein a length of the recessed area in the extending direction is a length that can include a range from a position 50 mm upstream of the induction coil to a position 50 mm downstream of the induction coil, based on a position directly below the induction coil that generates the induced current.

EFFECT OF THE INVENTION

As explained above, the present invention can appropriately suppress the deterioration and damage of the impedance device for manufacturing the electric-resistance welded pipe due to induction heating.

BRIEF DESCRIPTION OF THE DRAWINGS

[FIG. 1A] FIG. 1A is a schematic view schematically illustrating an outline of a configuration of a mandrel equipped with a conventional impedance device used for manufacturing an electric-resistance welded pipe.

[FIG. 1B] FIG. 1B is a schematic view schematically illustrating an outline of A-A cross-section of the mandrel equipped with the conventional impedance device used for manufacturing the electric-resistance welded pipe.

[FIG. 2] FIG. 2 is a side view schematically illustrating an outline of a configuration of a conventional electric-resistance welded pipe manufacturing device.

[FIG. 3] FIG. 3 is a cross-sectional view schematically illustrating an outline of A-A cross-section of the configuration of the conventional electric-resistance welded pipe manufacturing device.

[FIG. 4A] FIG. 4A is a side view schematically illustrating an outline of a configuration of a mandrel equipped with an impedance device according to a first embodiment of the present invention.

[FIG. 4B] FIG. 4B is a cross-sectional view schematically illustrating an outline of A-A cross-section of the configuration of the mandrel equipped with the impedance device according to the same embodiment.

[FIG. 5] FIG. 5 is a perspective view schematically illustrating an outline of a configuration of an electric-resistance welded pipe manufacturing device according to the same embodiment.

[FIG. 6] FIG. 6 is a side view schematically illustrating the outline of the configuration of the electric-resistance welded pipe manufacturing device using the mandrel equipped with the impedance device according to the same embodiment.

[FIG. 7] FIG. 7 is a cross-sectional view schematically illustrating an outline of A-A cross-section of the configuration of the electric-resistance welded pipe manufacturing device using the mandrel equipped with the impedance device according to the same embodiment.

[FIG. 8] FIG. 8 is a side view illustrating a modification example of the impedance device included by the electric-resistance welded pipe manufacturing device illustrated in FIG. 6.

[FIG. 9] FIG. 9 is a cross-sectional view of A-A cross-section explaining a formation width of a recessed area in a circumferential direction in the impedance device according to the same embodiment.

[FIG. 10] FIG. 10 is a cross-sectional view illustrating a modification example of the impedance device according to the same embodiment.

[FIG. 11] FIG. 11 is a side view illustrating a modification example of the impedance device according to the same embodiment.

[FIG. 12] FIG. 12 is a cross-sectional view illustrating a modification example of the impedance device according to the same embodiment.

[FIG. 13] FIG. 13 is an upper surface view illustrating a modification example of the impedance device according to the same embodiment.

[FIG. 14] FIG. 14 is a cross-sectional view of A-A cross-section of the impedance device illustrated in FIG. 13.

[FIG. 15A] FIG. 15A is an enlarged partial view illustrating a modification example of the mandrel and impedance device according to the same embodiment.

[FIG. 15B] FIG. 15B is an enlarged partial view illustrating a modification example of the mandrel and impedance device according to the same embodiment.

[FIG. 15C] FIG. 15C is an enlarged partial view illustrating a modification example of the mandrel and impedance device according to the same embodiment.

[FIG. 16] FIG. 16 is a side view schematically illustrating an outline of a configuration of an electric-resistance welded pipe manufacturing device according to a second embodiment of the present invention.

[FIG. 17] FIG. 17 is a side view illustrating a modification example of a mandrel and impedance device included by the electric-resistance welded pipe manufacturing device illustrated in FIG. 16.

[FIG. 18] FIG. 18 is an explanatory view schematically illustrating an appearance when an electric-resistance welded pipe is manufactured.

EMBODIMENTS FOR CARRYING OUT THE INVENTION

Hereinafter, preferred embodiments of the present invention are explained in detail with reference to the accompanying drawings. In this specification and drawings, components that have substantially the same functional configuration will be omitted from duplicated explanations by applying the same codes.

In the explanation herein, the terms "upstream" and "downstream" shall refer to "upstream" and "downstream" respectively, in a running direction of a metal band plate or open pipe described below.

(Conventional electric-resistance welded pipe manufacturing device)

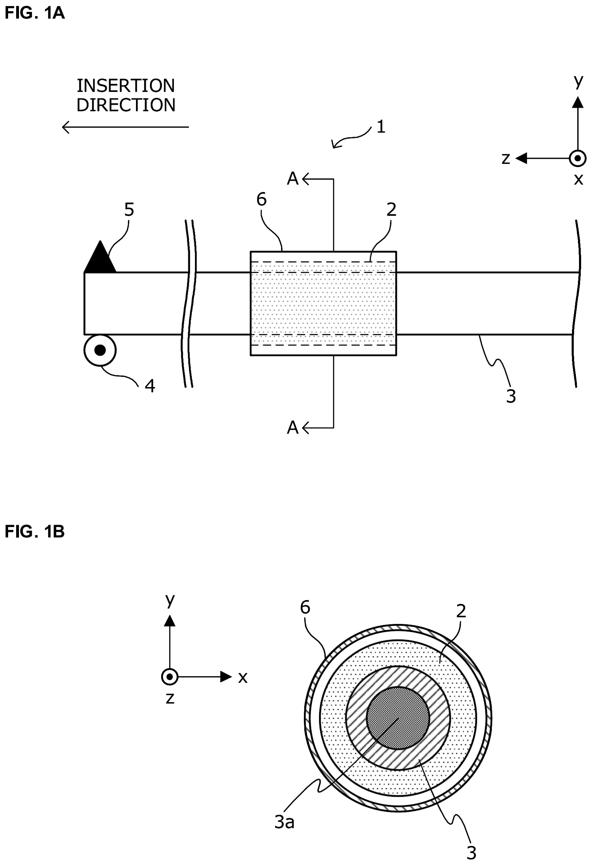

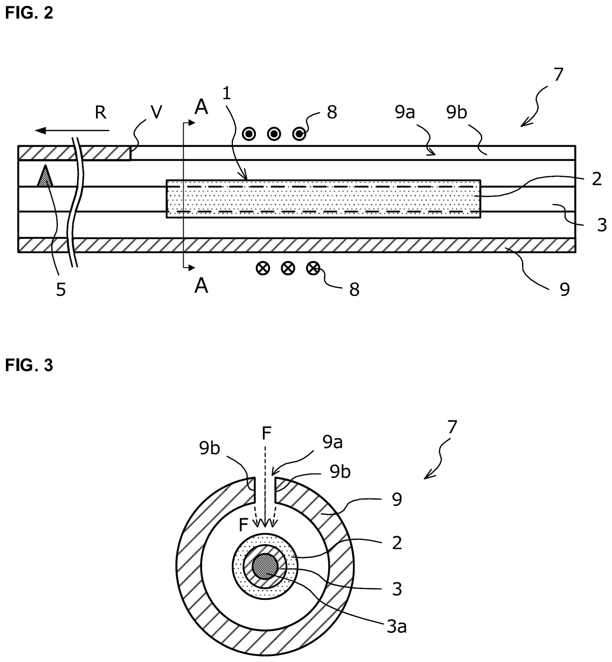

First, a conventional electric-resistance welded pipe manufacturing device will be explained. FIG. 1A and FIG. 1B are schematic views schematically illustrating an outline of a configuration of a mandrel equipped with a conventional impedance device used for manufacturing an electric-resistance welded pipe, and FIG. 2 and FIG. 3 are respectively a side view and a cross-sectional view schematically illustrating an outline of a configuration of a conventional electric-resistance welded pipe manufacturing device 7.

When electric-resistance welded pipes as described earlier are manufactured, a mandrel 3 equipped with an impedance device 1 as illustrated in FIG. 1A and FIG. 1B has been used. Here, the impedance device 1 is a device installed on the mandrel 3 as needed. As illustrated in FIG. 1A and FIG. 1B, such an impedance device 1 has a magnetic core called an impeder core 2.

The mandrel 3 is a member extending in a z-axis direction of FIG. 1A and is held cantilevered, for example, at an upstream side of a welding point V. The mandrel 3 is an annular member formed by a strong, nonmagnetic material made of stainless steel such as SUS304. The annular mandrel 3 may have a solid or hollow structure. An inside of the mandrel 3 having the hollow structure may be provided with a core material 3a as illustrated in FIG. 1B, or may have cooling water flowing through it to cool the impedance device 1.

In addition, a magnetic core called an impeder (that is, an impeder core 2) is provided to cover the mandrel 3 at a predetermined range around an outer circumference of the mandrel 3 to prevent flow of an induced current that tends to flow around an inner circumferential surface of an open pipe 9 and does not take part in welding among the induced current generated by an induction coil 8. The impeder core 2 is formed by a ferromagnetic material such as soft ferrite, electromagnetic steel, or amorphous alloy, for example.

Here, the impeder core 2 is housed in an impeder case 6 made of a resin material, for example, to protect it from destruction due to breakage or the like. An inside of the impeder case 6 is supplied with, for example, cooling water, which is used to cool the impeder core 2. In the following description, a roller 4 and the impeder case 6 are not illustrated to simplify the explanation.

Such an impedance device 1 is inserted into the open pipe 9. A tip of the mandrel 3 is provided with the roller 4 to facilitate insertion of the impedance device 1 into the open pipe 9 and a cutting tool 5 to cut a weld bead extending along the running direction of the open pipe. The roller 4 pushes against the cutting tool 5 to stabilize the cutting of the weld bead by the cutting tool 5. The cutting tool 5 is attached to the tip of the mandrel 3 at a downstream side of the welding point V and scrapes the weld bead produced by welding on an inner surface of the pipe. Also on an outer surface of the pipe, there is a cutting tool (not illustrated in the figure) that scrapes off the weld bead produced on the outer surface of the pipe.

As illustrated in FIG. 2 and FIG. 3, in an electric-resistance welded pipe manufacturing device 7, a metal band plate, which is a material to be welded, is roll-formed into the cylindrical open pipe 9 by being gradually bent by forming rolls (not illustrated in FIG. 2 and FIG. 3) while running from a flat plate state. In the open pipe 9, end portions 9b facing each other across an opening 9a are pressed against each other with squeeze rolls (not illustrated in FIG. 2 and FIG. 3), which are one of components of the electric-resistance welded pipe manufacturing device 7. As a result, the open pipe 9 is passed through so that the end portions 9b make contact at the welding point V. Normally, a head roll (not illustrated) presses the welded portion from diagonally above.

The induction coil 8 that generates an induced current to melt the end portions 9b of the open pipe 9 is provided on an outer circumference of the open pipe 9 and upstream of the welding point V in a running direction R. The induction coil 8 is provided so as to circulate along an outer circumferential surface of the open pipe 9. The end portions 9b of the open pipe 9 are pressure-welded by the squeeze rolls described above while being melted by the induced current to be formed into a tubular shape. The induction coil 8 is not illustrated in FIG. 3.

Here, the induction coil 8 in the conventional electric-resistance welded pipe manufacturing device 7 circulates around a whole circumference of the open pipe 9, as described above. In other words, the induction coil 8 is disposed to straddle the opening 9a of the open pipe 9. In such a case, a high-density magnetic flux F generated by the induction coil 8 directly enters the impedance device 1, which may cause magnetic flux saturation of the impeder core 2 to burn out.

The present inventors have found that causes of burnout of the impeder core 2 are the following two points, as a result of an investigation.

(1) As illustrated in FIG. 3, the magnetic flux F entering the open pipe 9 from the opening 9a directly enters the impeder core 2, causing magnetic flux saturation.

(2) As illustrated in FIG. 3, a magnetic flux density increases with the magnetic flux F generated by the induced current flowing through the end portion 9b, causing the magnetic flux saturation, because the impeder core 2 is disposed near a lower end of the end portion 9b.

The magnetic flux-saturated impedance device 1 is unable to suppress an inner circumferential current, and the induced current flowing around the inner circumference of the pipe further accelerates to generate heat, exceeding the Curie point temperature at which magnetic performance is lost. When a material of the impeder core 2 is soft ferrite, the heat generated will cause cracking due to thermal stress, rendering it unusable. When the material of the impeder core 2 is electromagnetic steel, it will cause erosion, rendering it unusable.

Here, the ferromagnetic material such as soft ferrite, which is the material of the impeder core 2, exhibits characteristics of inhibiting flow of this induced current by being disposed near the induced current. On the other hand, the ferromagnetic material also has a property of collecting magnetic flux because its initial permeability is 1000 times or more than that of air (magnetic resistance is 1/1000 or less). This allows the magnetic flux to selectively penetrate the ferromagnetic material (impeder core 2) with low magnetic resistance, which tends to result in a particularly high magnetic flux density.

As mentioned above, the mandrel 3 is held cantilevered at the upstream side in the running direction R. Therefore, a position of the impeder core 2 may have to deflect upward in the inside of the open pipe 9 to bring the cutting tool 5 into contact with the inner surface bead. This may result in the impeder core 2 being brought closer to the induction coil 8. Thus, each of a separation distance between the impeder core 2 and the induction coil 8, which is a generation source of the magnetic flux, and a separation distance between the impeder core 2 and the lower end of the end portion 9b tends to become smaller, which further increases the magnetic flux density.

The present inventors have investigated a method that can reduce the magnetic flux F entering the impeder core 2 to be a saturation magnetic flux density or less and maintain the state of being the saturation magnetic flux density or less. Concretely, since a high magnetic flux density area of the impeder core 2 is often concentrated in a specific area near the lower end of the end portion 9b (more concretely, in an area on an upper side of the impeder core 2), a method to reduce the magnetic flux density in such an area has been investigated.

As a result, the inventors focused that the impeder core 2 can be used without confronting magnetic flux saturation by utilizing the fact that the magnetic flux density is inversely proportional to the square of a distance from a generation source of the magnetic flux. Concretely, it was found that the magnetic flux density of the impeder core 2 can be reduced by increasing the distances of the impeder core 2 to the induction coil 8 and to the lower end of the end portion 9b only in an area of the impeder core 2 near the induction coil 8 and where the magnetic flux density is high, compared to the rest of the area. The following describes preferred embodiments of the present invention completed by this finding.

(First Embodiment)

<Configuration of Mandrel equipped with Impedance Device>

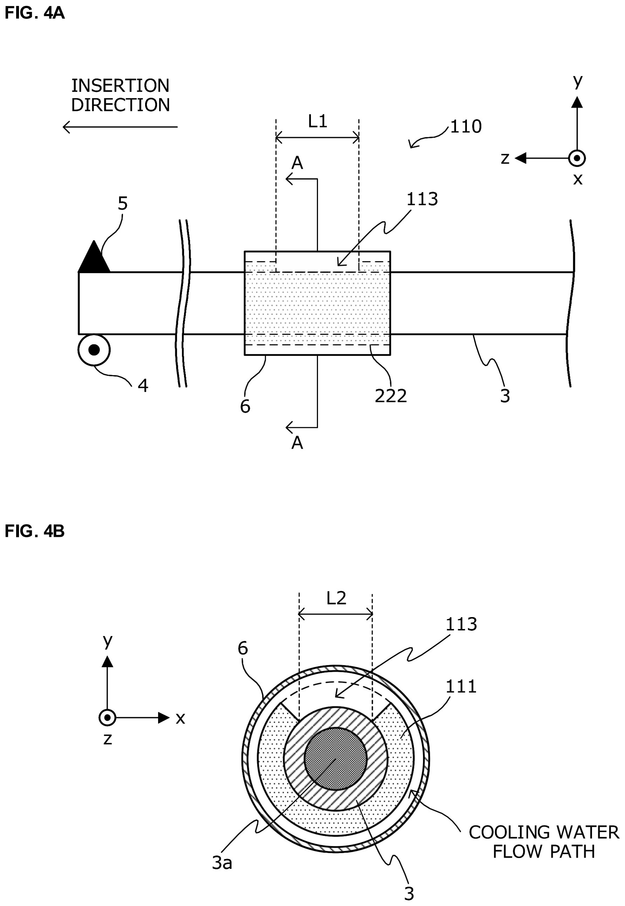

First, a configuration of a mandrel equipped with an impedance device according to a first embodiment of the present invention will be described with reference to FIG. 4A and FIG. 4B. FIG. 4A is a side view illustrating an outline of the configuration of the mandrel equipped with the impedance device of this embodiment, and FIG. 4B is an A-A cross-sectional view of the mandrel equipped with the impedance device illustrated in FIG. 4A.

As illustrated in FIG. 4A and FIG. 4B, an impedance device 110 of this embodiment has an impeder core 111 and the impeder case 6. The mandrel 3 is provided with the roller 4 and the cutting tool 5.

Here, since the mandrel 3, the roller 4, the cutting tool 5, and the impeder case 6 in the impedance device 110 of this embodiment are the same as the mandrel 3, the roller 4, the cutting tool 5, and the impeder case 6 in the conventional impedance device 1 illustrated in FIG. 1, the explanation is omitted hereafter.

The impeder core 111 of this embodiment is provided at a predetermined range in an outer circumference of the mandrel 3 to prevent flow of an induced current that tends to flow around the inner circumferential surface of the open pipe and does not take part in welding among the induced current generated by an induction coil.

A ferromagnetic material with insulating properties is used for such an impeder core 111. Here, in this specification, the "ferromagnetic material" means a substance whose initial permeability is 1000 or more. In addition, the ferromagnetic material "having insulating properties" means that the ferromagnetic material has conductivity of $1 \times 10^{-3}$ S/m or less.

Materials that can be used as the impeder core 111 of this embodiment include, for example, soft ferrite, electromagnetic steel, amorphous alloys, and other materials that satisfy the initial permeability as described above.

As illustrated in FIG. 4A, a recessed area 113 is formed at a part of the impeder core 111 of this embodiment with a size within a predetermined range along an extending direction of the mandrel 3 (z-axis direction in FIG. 4A).

The impedance device 110 of this embodiment is used together with the induction coil 8. The range in which such a recessed area 113 is formed (more precisely, the range in the z-axis direction illustrated in FIG. 4A) is set considering a range of influence of the magnetic flux generated by the induction coil 8, as will be explained again below.

For example, in the impeder core 111 of this embodiment, the size of the range in the z-axis direction where such a recessed area 113 is provided (length L1 in FIG. 4A) is preferably 100 mm or more and an entire length of the impeder core 111 or less.

More precisely, the size of the range in the z-axis direction where the recessed area 113 is provided depends on a size of the induction coil 8 used as described above but is preferably designed to be, for example, the length of the induction coil 8 + 100 mm or more and the length of the induction coil 8 + 300 mm or less.

On the other hand, the size of the recessed area 113 (more precisely, the length in an x-axis direction at a bottom surface of the recessed area 113, a length L2 in FIG. 4B) in a direction (x-axis direction in FIG. 4A) orthogonal to the extending direction of the mandrel 3 (z-axis direction in FIG. 4A) is 10 mm or more and 1/3 of an outer circumferential length of the mandrel 3 or less. Such a size generally corresponds to about a width of the opening 9a in the open pipe 9 used for manufacturing the electric-resistance welded pipe.

Such a recessed area 113 is formed by removing the impeder core 111 in a thickness direction of the mandrel 3, for example, at a portion of an upper part of the impeder core 111, as illustrated in FIG. 4A and FIG. 4B. In other words, the recessed area 113 of this embodiment can be said to be a cutout portion formed by cutting out at least a part of the impeder core 111.

A depth of the recessed area 113 formed at the impeder core 111 is not limited and may be set by removing a part of the impeder core 111 to reduce a thickness of the impeder core 111, or by removing the impeder core 111 at the corresponding portion with a depth that roughly matches its thickness (that is, all of the impeder core 111 at the corresponding portion is removed). Further, the impeder core 111 may not be installed at the corresponding portion from the beginning.

In the example illustrated in FIG. 4A and FIG. 4B, a case is illustrated where the recessed area 113 is formed by removing the impeder core 111 with the depth that roughly matches the thickness of the impeder core 111. In such a case, a surface of the mandrel 3 is exposed at a bottom part of the recessed area 113.

The formation of such a recessed area 113 at the upper part of the impeder core 111 (the portion on a positive direction side of the y-axis) increases the separation distances of the impeder core 111 to the induction coil 8 and to the lower end of the end portion 9b of the open pipe 9 in the recessed area 113. Since a range where such a recessed area 113 is provided is where high-density magnetic flux is concentrated, as explained again below, the magnetic flux density of the impeder core 111 can be reduced by the formation of such a recessed area 113. This allows the deterioration and damage of the impeder core 111 due to induction heating to be properly suppressed.

The impeder core 111 of this embodiment is housed in the impeder case 6 made of resin material, for example, as illustrated in FIG. 4A and FIG. 4B, to be protected from destruction due to breakage or the like.

As illustrated in FIG. 4B, such an impeder case 6 is preferably provided outside the impeder core 111 so that a void exists between the impeder case 6 and the impeder core 111. In this case, it is preferable that cooling water is flowed through the hollow portion of the impeder case 6 (the void portion between the impeder case 6 and the impeder core 111).

As explained earlier, the recessed area 113 of this embodiment is formed by removing at least a part of the impeder core 111 to reduce the thickness of the impeder core 111 in the recessed area 113 (in some cases, removing the impeder core 111 all). By allowing cooling water to flow through the hollow portion of the impeder case 6, more cooling water can flow through the portion where the recessed area 113 is formed compared to the portion outside of the recessed area 113, enabling more efficient cooling of the portion where the recessed area 113 is formed. This makes it possible to prevent heat generation in the recessed area 113 and to prevent deterioration and damage of the impeder core 111.

<Configuration of Electric-Resistance Welded Pipe Manufacturing Device 100>

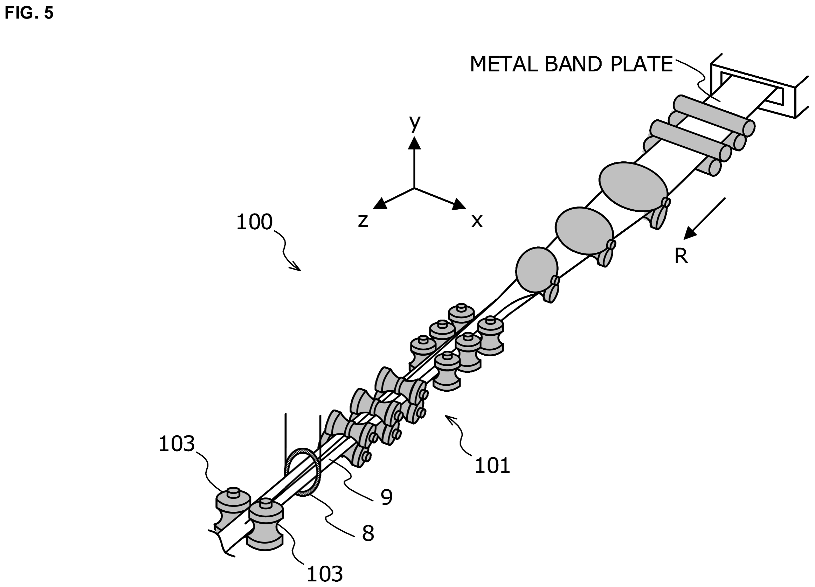

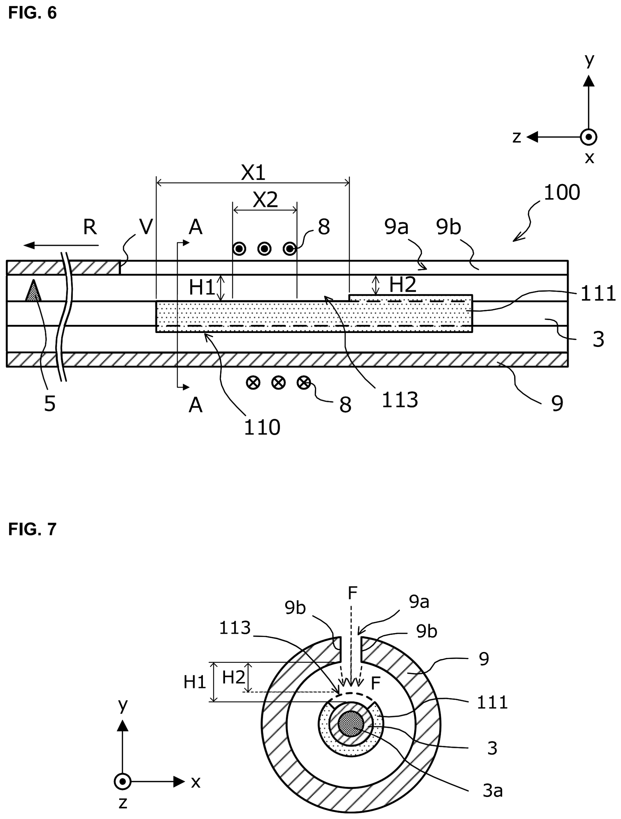

A configuration of an electric-resistance welded pipe manufacturing device 100 using the impedance device 110 of this embodiment will be described with reference to FIG. 5 to FIG. 8. FIG. 5, FIG. 6, and FIG. 8 are side views illustrating an outline of the configuration of the electric-resistance welded pipe manufacturing device 100. FIG. 7 is an A-A cross-sectional view of the electric-resistance welded pipe manufacturing device 100 illustrated in FIG. 6. In the following explanation, illustrations of the roller 4 provided on the mandrel 3 and the impeder case 6 of the impedance device 110 are omitted to simplify the explanation. Also, in the configuration of the electric-resistance welded pipe manufacturing device 100, elements that have substantially the same functional configuration as the electric-resistance welded pipe manufacturing device 7 illustrated in FIG. 1A to FIG. 3 will be marked with the same codes to omit redundant explanations.

As illustrated in FIG. 5, the electric-resistance welded pipe manufacturing device 100 of this embodiment is a device used for manufacturing electric-resistance welded pipes, in which the end portions of the open pipe 9 that has been bent into a cylindrical shape while being conveyed in a predetermined running direction are melted by an induced current and then the end portions are butted and electric-resistance welded together. The electric-resistance welded pipe manufacturing device 100 is equipped with a forming roll group 101 for forming a desired electric-resistance welded pipe shape and the induction coil 8 in addition to the impedance device 110 (not illustrated in FIG. 5) as described above. As illustrated in FIG. 5, a pair of squeeze rolls 103 is provided further downstream of the induction coil 8. Here, steel or stainless steel, for example, is used as a material for the above-mentioned open pipe 9. In the following explanation, particular attention will be paid to the induction coil 8 and the impedance device 110 among the configuration of the electric-resistance welded pipe manufacturing device 100 illustrated in FIG. 5.

As illustrated in FIG. 6 and FIG. 7, the electric-resistance welded pipe manufacturing device 100 of this embodiment has the induction coil 8 provided along the outer circumference of the open pipe 9 and the impedance device 110 provided inside the open pipe 9 and mounted on the mandrel 3.

As described above, the recessed area 113 is formed at a part of the impeder core 111 of this embodiment. The area where this recessed area 113 is formed is described again, focusing on a relationship with the induction coil 8 that makes up the electric-resistance welded pipe manufacturing device 100, as follows.

In other words, the area where the recessed area 113 is formed in the impeder core 111 of this embodiment preferably corresponds to the area where the magnetic flux density is high, as described above. Therefore, as illustrated in FIG. 6, for example, the impedance device 110 of this embodiment is disposed inside the open pipe 9 so that the recessed area 113 faces the end portion 9b of the open pipe 9 and at least a part of a disposed position of the induction coil 8 is included in the recessed area 113 in the extending direction of the mandrel 3.

Concretely, the recessed area 113 is preferably formed to include, for example, at least a part of a direct-below range X2 of the induction coil 8, which is particularly strongly affected by the magnetic flux among a range from around 50 mm upstream of the induction coil 8 to the welding point V in the running direction R of the open pipe 9 (hereinafter referred to as a "magnetic flux-affected range X1"). For example, the recessed area 113 is preferably long enough to include a range from a position 50 mm upstream of the induction coil 8 to a position 50 mm downstream of the induction coil 8, based on the position directly below the induction coil 8.

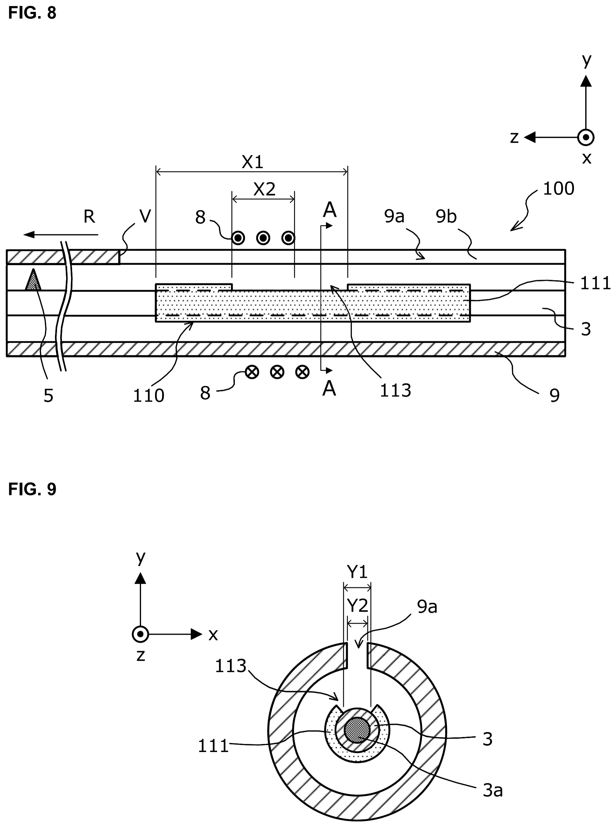

At this time, the recessed area 113 may be formed in all of the magnetic flux-affected range X1, as illustrated in FIG. 6, for example, or only in the direct-below range X2 and its upstream side (a negative direction side of the z-axis in FIG. 8), as illustrated in FIG. 8, for example.

In other words, as illustrated in FIG. 6 and FIG. 7, the impedance device 110 of this embodiment is configured so that a separation distance H1 between an upper end of the impedance device 110 and the lower end of the end portion 9b of the open pipe 9 at the portion where the recessed area 113 is formed is larger than a separation distance H2 between the upper end of the impedance device 110 and the lower end of the end portion 9b of the open pipe 9 at a portion where the recessed area 113 is not formed (in this embodiment, for example, at an upstream side of the recessed area 113).

The upper end of the impedance device 110 refers to, for example, an upper end of the exposed mandrel 3 at the portion where the recessed area 113 is formed and to an upper end of the impeder core 111 at the portion where the recessed area 113 is not formed (at the upstream side of the recessed area 113) when explained using the case illustrated in FIG. 6 as an example.

According to this embodiment, the separation distance of the impeder core 111 to the induction coil 8, which is the magnetic flux generation source, or to the lower end of the end portion 9b of the open pipe 9 is increased because the recessed area 113 is formed at the impeder core 111 to include at least the direct-below range X2. This allows the magnetic flux F entering the impeder core 111 to be suppressed or the magnetic flux F entering the impeder core 111 to be attenuated, thereby preventing the impeder core 111 from confronting the magnetic flux saturation. As a result, in the impedance device 110 of this embodiment, it is possible to suppress the heat generation of the impeder core 111 and damage to the impeder core 111 and the impedance device 110, and to continue stable production of electric-resistance welded pipes for a long time. As a result, the time and cost required for maintenance of the impedance device 110 can be reduced because a manufacturing line downtime associated with replacement of the impedance device 110 can be reduced.

As illustrated in FIG. 9, a width Y1 of the recessed area 113 at the impeder core 111 in a circumferential direction is preferably at least the same as an opening width Y2 of the opening 9a of the open pipe 9 located directly above it, and is more preferably larger than the opening width Y2. The width Y1 of the recessed area 113 is formed to be the same as or preferably larger than the opening width Y2 of the opening 2a so that the magnetic flux F entering the impeder core 111 can be more appropriately suppressed.

According to this embodiment, the recessed area 113 is preferably formed by removing the impeder core 111 at the upper part of the impeder core 111 with the width Y1 that is at least the opening width Y2 of the opening 9a or more. According to this embodiment, even when the impeder core 111 is not provided along a whole outer circumference of the mandrel 3 in this manner, the induced current that flows around from the end portion 9b can be properly suppressed.

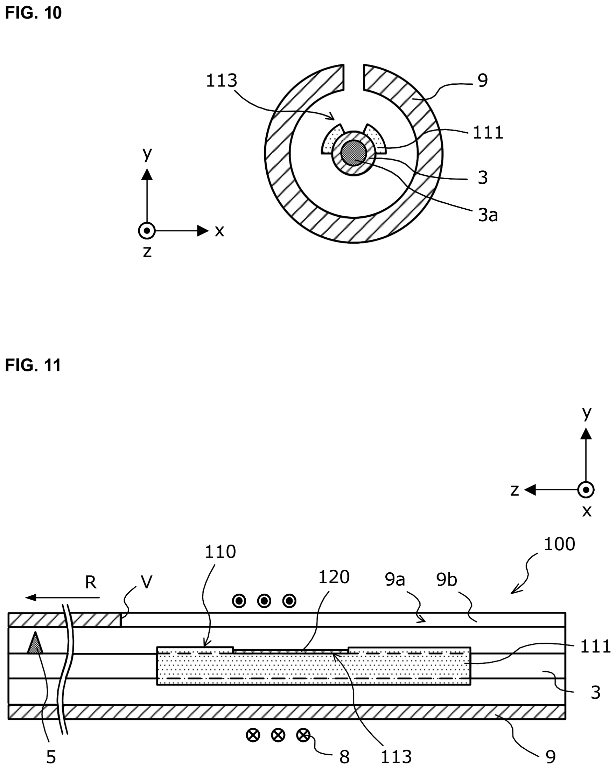

This point will be explained with reference to FIG. 10. FIG. 10 is a cross-sectional view illustrating a modification example of the impedance device 110 of this embodiment mounted on the mandrel 3.

The present inventors have diligently studied and found that if the impeder core 111 is installed on a part of an outer circumferential surface of the mandrel 3 (more precisely, at least an upper half of the mandrel 3), the induced current that flows around an inner circumferential side of the open pipe 9 from the end portion 9b can be suppressed. In other words, the impeder core 111 may be provided only at an upper half of the outer circumference of the impedance device 110 (that is, only at an area that extends in an arc shape for 1/2 circumference) as illustrated in FIG. 10. This allows for proper suppression of the induced current that flows around the inner circumferential side of the open pipe 9 from the end portion 9b, as well as reducing a mass and cross-sectional area of the impedance device 110.

The modification example illustrated in FIG. 10 is particularly useful, for example, when the impedance device 110 of this embodiment is applied in an electric-resistance welded pipe manufacturing device that manufactures electric-resistance welded pipes with a small pipe diameter. That is, when the pipe diameter of the electric-resistance welded pipe to be manufactured is small, the diameter of the mandrel 3 provided in the open pipe 9 is also small. Therefore, if the mass of the impeder core 111 mounted on the mandrel 3 is not lightened, the mandrel 3 may deflect, which may result in a case where bead cutting cannot be performed effectively or the impeder becomes less effective. Therefore, the impeder core 111 can be made lighter and the deflection of the mandrel 3 can be suppressed by disposing the impeder core 111 only at a portion where the impeder functions effectively (in the example in FIG. 10, only at the upper half of the outer circumference of the mandrel 3). This allows effective bead cutting and also prevents the impeder from losing its effectiveness even when manufacturing the electric-resistance welded pipe with a small pipe diameter.

The surface of the mandrel 3 exposed by the removal of the impeder core 111 described above (in other words, the portion of the impeder core 111 where the recessed area 113 is formed) may be provided with an electromagnetic shielding material 120 to protect the mandrel 3, as illustrated in FIG. 11. The electromagnetic shielding material 120 is preferably made of a nonmagnetic material as same as the mandrel 3. For example, the materials of such an electromagnetic shielding material 120 include a copper plate, copper mesh, carbon, carbon fiber, or other materials with insulation measures. It is more preferable that the electromagnetic shielding material 120 has a structure and shape such as a braided wire mesh whose surface is insulation-coated, so that the electromagnetic shielding material 120 itself is less likely to generate heat due to a magnetic field. On the surface of the exposed mandrel 3 (the portion of the impeder core 111 where the recessed area 113 is formed), an additional impeder may be provided to cover the recessed area 113 instead of the electromagnetic shielding material 120.

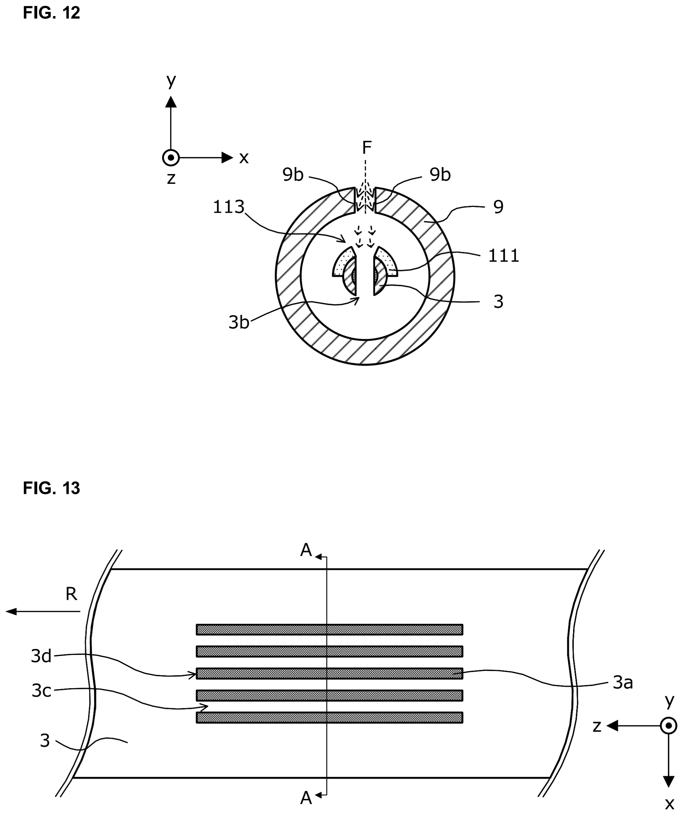

As illustrated in FIG. 12, a through hole 3b may be formed through the mandrel 3 in a vertical direction over at least a part or an entire length of the mandrel 3 exposed by the formation of the recessed area 113. By forming the through hole 3b in this manner, the magnetic flux F is less likely to pass through a space with high magnetic resistance. As a result, more magnetic flux can enter the end portion 9b of the open pipe 9, and the heat generation of the mandrel 3 can be more suppressed.

FIG. 12 illustrates an example of a case where the through hole 3b is formed when the impeder core 111 is installed at the upper half along the outer circumference of the mandrel 3. However, as illustrated in FIG. 7, for example, even when the impeder core 111 is provided over a whole circumference of the mandrel 3, the through hole 3b can be formed by removing the impeder core 111 at an upper part and lower part of the impedance device 110, which is the portion where the through hole 3b is to be formed. In such a case, the impeder core 111 is disposed to the lower part of the mandrel 3, which prevents damage to the impeder core 111 and mandrel 3 while further suppressing the induced current that flows around the inner circumferential side of the open pipe 9.

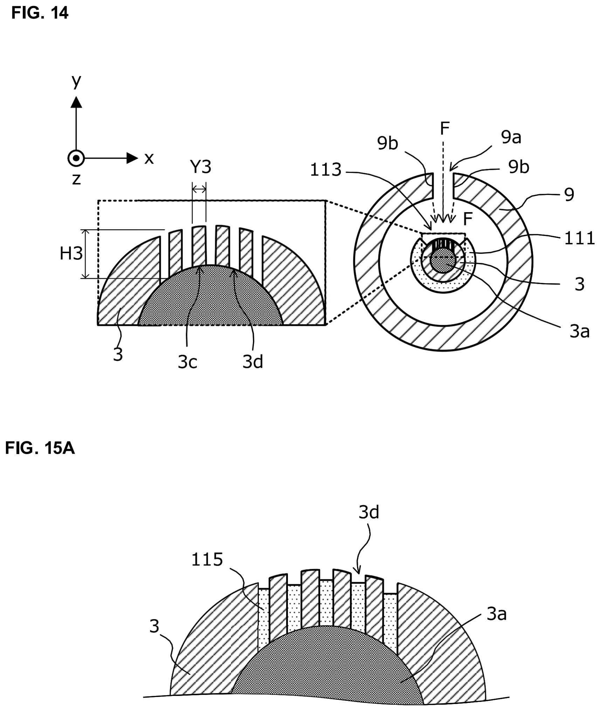

Furthermore, in the mandrel 3 exposed by the removal of the impeder core 111 described above, as illustrated in FIG. 13 and FIG. 14, a part of the mandrel 3 may be cut out to form a plurality of slits 3d mutually separated from each other across a lattice 3c, which is a metal portion where the mandrel 3 remains. Accordingly, in the portion of the mandrel 3 where the slits 3d are formed, the lattice 3c where the mandrel 3 remains, and each slit 3d where the mandrel 3 is cut out, are alternately arranged along the circumferential direction of the mandrel 3.

The slits 3d are preferably formed to cover at least the direct-below range X2, which is strongly affected by the magnetic flux in the running direction R of the open pipe 9, and more preferably formed such that the slits 3d are extended to be formed in a range up to about 50 mm in front and behind the direct-below range X2 in the running direction R.

A formation width Y3 and depth H3 (see FIG. 14) per one lattice 3c, which is the metal portion formed between the slits 3d, should be at least as large as the induced currents from the opening 9a and end portion 9b do not form a closed circuit. In other words, the formation width Y3 and depth H3 per one lattice 3c are not particularly limited as long as they are twice a penetration depth of the induced current, which is determined by a frequency of the current, and conductivity and initial permeability of the mandrel 3, or less. The penetration depth of the induced current can be calculated based on Equation (1) below.

$$\delta = 5.03 \times (\rho/\mu f)^{0.5} \dots \text{Equation (1)}$$

$\delta$: penetration depth (unit: cm)
$\rho$: specific resistivity (that is, reciprocal of conductivity) of the mandrel 3 (unit: $\mu\Omega$-cm)
$\mu$: initial permeability of the mandrel 3
f: frequency of the current (unit: Hz)

The specific resistivity of the mandrel 3 is about 20 $\mu\Omega$·cm at room temperature and about 128 $\mu\Omega$-cm at 1000°C when the material of the mandrel 3 is steel. Since stainless steel, which is a nonmagnetic material, is often used as the material of the mandrel 3, the initial permeability of the mandrel 3 should be treated as 1. When the material of the mandrel 3 is a magnetic material, the initial permeability varies with the strength of the magnetic field. For example, when the material of the mandrel 3 is steel, it shows a value of about 20 to 1000 through heating.

The formation width Y3 of the lattice 3c is a remaining width of the mandrel 3 in the circumferential direction seen from a cross-section, as illustrated in FIG. 14, and can be paraphrased as a formation interval of the slits 3d. Therefore, in this embodiment, the formation interval Y3 of the slits 3d is twice the penetration depth of the induced current or less and does not need to be even as long as the closed circuit is not formed.

In the mandrel 3 with the slits 3d formed in this way, the induced current that enters each slit 3d from the opening 9a and the end portion 9b, and flows over a surface of the lattice 3c is canceled and attenuated by being in opposite phases with each other on the surfaces of adjacent lattices 3c. As a result, the mandrel 3 with the slits 3d can better prevent damage to the impeder core 111 and the mandrel 3 caused by the induced current, while better suppressing the induced current that flows around the inner circumferential side of the open pipe 9.

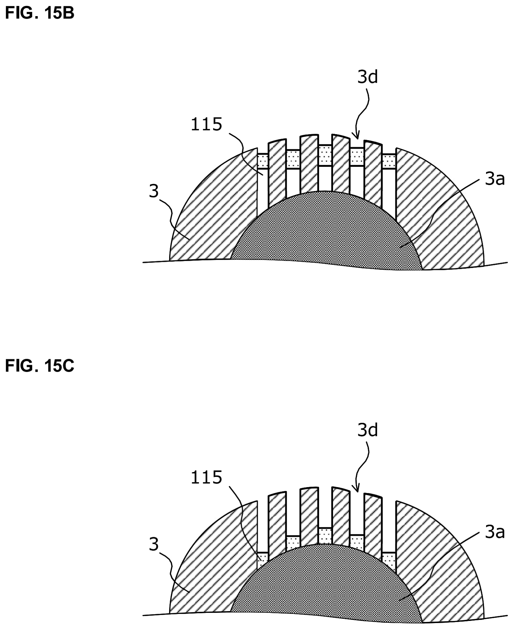

When the slits 3d are formed on the mandrel 3 in this manner and cooling water is allowed to flow through the mandrel 3 instead of the core material 3a, there is a possibility that the cooling water may flow out of the mandrel 3 due to the formation of the slits 3d. Therefore, when cooling water is allowed to flow through the mandrel 3 and such cooling water is to be prevented from flowing out, the slits 3d may be sealed using a sealing material 115 that does not cause dielectric loss, such as adhesive or resin, as illustrated in FIG. 15A as an example. In this case, the sealing material 115 needs not to be completely filled over an entire length of the depth H3 of the slit 3d. As exemplified in FIG. 15B and FIG. 15C, it is sufficient if the sealing material 115 is present in at least part of the depth H3 of the slit 3d to prevent cooling water from flowing out from the inside.

Although not illustrated in the figure, an insulating film/layer, or the electromagnetic shielding material 120 illustrated in FIG. 11 may be provided along at least either of the outer circumferential surface or inner circumferential surface of the mandrel 3, in other words, so as to seal at least either of an upper part or lower part of the slits 3d, instead of filling the slits 3d with the sealing material 115 in this manner.

Therefore, at least one of the sealing material 115, the insulating film/layer, or the electromagnetic shielding material 120 as a sealing member may be provided at the portion of the mandrel 3 where the slits 3d are formed to prevent the cooling water from flowing out of the inside of the mandrel 3.

(Second Embodiment)

In the first embodiment described above, the recessed area 113 was formed by removing a part of the impeder core 111 so that the thickness of the impeder core becomes thinner or by completely removing the impeder core 111, but the method of forming the recessed area 113 is not limited to such examples. A second embodiment of the present invention is described below.

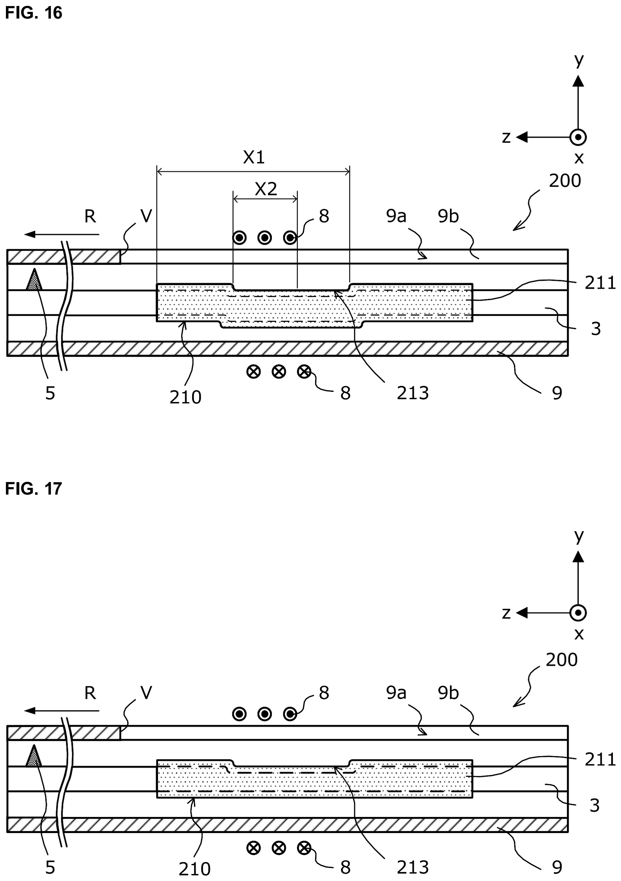

A configuration of an electric-resistance welded pipe manufacturing device 200 having an impedance device 210 of the second embodiment of the present invention mounted on the mandrel 3 will be described below, with reference to FIG. 16 and FIG. 17. FIG. 16 and FIG. 17 are side views illustrating an outline of the configuration of the electric-resistance welded pipe manufacturing device 200 having the impedance device 210 of this embodiment mounted on the mandrel 3. In the configuration of the electric-resistance welded pipe manufacturing device 200, duplicated explanations are omitted for elements that have substantially the same functional configuration as those of the electric-resistance welded pipe manufacturing device 7 or the electric-resistance welded pipe manufacturing device 100, by applying the same codes.

As illustrated in FIG. 16, the electric-resistance welded pipe manufacturing device 200 of the second embodiment of the present invention has the forming roll group (not illustrated in FIG. 16), the induction coil 8 provided along the outer circumference of the open pipe 9, and the impedance device 210 provided inside the open pipe 9, as same as the electric-resistance welded pipe manufacturing device 100 illustrated in FIG. 5. Further, the impedance device 210 has an impeder core 211.

In the impeder core 211, a recessed area 213 is formed at an area of high magnetic flux density described above, similar to the recessed area 113 in the first embodiment. Concretely, the recessed area 213 is formed to include at least a part of the direct-below range X2 of the induction coil 8, which is particularly strongly affected by the magnetic flux, among the magnetic-flux affected range X1 in the running direction R of the open pipe 9.

In this embodiment, the recessed area 213 is formed by, for example, the mandrel 3 and the impeder core 211 being curved downward within an arbitrary range in the magnetic-flux affected range X1, as illustrated in FIG. 16. In other words, the recessed area 213 formed at the impeder core 211 can be rephrased as a curved area of the impeder core 211.

A depth of such a recessed area 213, that is, a curved depth of the impeder core 211, is set to roughly match a thickness of the impeder core 211, similar to the recessed area 113 of the first embodiment, as an example.

According to this embodiment, the impeder core 211 is curved to form the recessed area 213 within a range including at least a part of the direct-below range X2 of the induction coil 8, so that the separation distance to the induction coil 8 as the magnetic flux generation source or to the lower end of the end portion 9b becomes larger than that at the upstream side and the magnetic flux entering the impeder core 211 can be attenuated. This also prevents the impeder core 211 from confronting the magnetic flux saturation, thereby suppressing heat generation in the impeder core 211 and damage to the impeder core 211 and the impedance device 210, enabling stable production of the electric-resistance welded pipes to continue for a long time. As a result, the manufacturing line downtime due to replacement of the impedance device 210 can be reduced, and the time and cost required for the maintenance of the impedance device 210 can be reduced.

According to this embodiment, the recessed area 213 can be formed without removing the impeder core 211, unlike the first embodiment. Therefore, according to this embodiment, it is possible to enjoy the same impedance effect as conventional impedance devices, and further, damage to the impedance device 210, especially the impeder core 211, can be suppressed.

The impeder core 211 may be provided only at an upper half along an outer circumferential surface of the impedance device 210, only in an area that extends in an arc shape for 1/2 circumference as described also in the first embodiment.

If strength of the impedance device 210 after curving can be ensured, for example, only a top surface of each of the mandrel 3 and the impeder core 211 can be curved to form the recessed area 213, as illustrated in FIG. 17.

Here, the configuration of the impedance device 210 of the second embodiment of the present invention, as explained above, can be applied as appropriate to the impedance device 110 of the first embodiment of the present invention.

EXAMPLES

Hereinafter, there will be explained examples of the present invention, but the present invention is not limited to the following examples.

In the following examples, a difference in magnetic flux density due to different forms of the impedance device was determined by electromagnetic field analysis, assuming a case where an open pipe of ordinary steel, ø216.3 mm in diameter and 6 mm in wall thickness, was heated by an induction coil with a width of 150 mm in a longitudinal direction installed, 150 mm upstream from the welding point. The induction coil was disposed with a gap of 5 mm from the open pipe and a high-frequency current of 4000 [A] was passed therethrough at a frequency of 300 kHz.

It was assumed that as the impeder core, a single soft ferrite with a thickness of 10 mm, a width of 15 mm in a circumferential direction, and a length of 50 mm in a longitudinal direction (relative permeability of 1500, saturation magnetic flux density of 0.45 T) was used, and multiple soft ferrites were adhered adjacent to each other on an outer circumference of a SUS304 mandrel with a diameter of ø140 mm. Installation conditions of the impeder core were as follows.

(Example 1)

In Example 1, the electromagnetic field analysis was performed on a situation as illustrated in FIG. 8 in the first embodiment. In Example 1, a case was assumed where the mandrel was exposed by forming a recessed area with a width of 16 mm in the x-axis direction in FIG. 8 in a range from 50 mm upstream of the induction coil to 250 mm toward the welding point side. In this recessed area, an impeder was installed, and it was assumed a case where the separation distance from an upper end of the impeder to the open pipe was 23 mm, and the separation distance from an impedance device surface at another portion (namely, from the impeder core) to the open pipe was 13 mm. Such an assumption corresponds to the case where the impeder is installed at the area within the range of the length X1 and outside the length X2, on the side closer to the point V in FIG. 8.

(Example 2)

In Example 2, the electromagnetic field analysis was performed on a situation as illustrated in FIG. 6 in the first embodiment. In Example 2, a case was assumed where the mandrel was exposed by forming a recessed area with a width of 16 mm in the x-axis direction in FIG. 6 in a range from 50 mm upstream of the induction coil to a downstream end portion of the impeder core (namely, an entire range of the magnetic-flux affected area). This was the case where the separation distance from the mandrel to the open pipe was 33 mm and the separation distance from the impedance device surface at another portion (namely, from the impeder core) to the open pipe was 13 mm.

(Example 3)

In Example 3, it was assumed a case where a 5 mm thick copper mesh was provided as the electromagnetic shielding material on the mandrel exposed in Example 2, as illustrated in FIG. 10 in the first embodiment.

(Comparative Example)

Comparative Example was a case where the recessed area was not formed as illustrated in FIG. 2 and FIG. 3, namely, the separation distance from the impedance device to the open pipe was constant at 13 mm as the electric-resistance welded pipe manufacturing device in the conventional technology.

(Results of Electromagnetic field analysis)

Table 1 below summarizes a maximum magnetic flux density and a mandrel heat generation amount ratio as a result of the electromagnetic field analysis in each of Examples 1 to 3 and Comparative Example. The mandrel heat generation amount ratio in the table is the ratio of the heat generation amount of each Example when the heat generation amount in Comparative Example is 1.0.

[Table 1]

|  | MAXIMUM MAGNETIC FLUX DENSITY [T] | MANDREL HEAT GENERATION AMOUNT RATIO [-] |
|---|---|---|
| EXAMPLE 1 | 0.43 | 0.93 |
| EXAMPLE 2 | 0.42 | 1.12 |
| EXAMPLE 3 | 0.42 | 0.96 |
| COMPARATIVE EXAMPLE | 0.62 | 1.00 |

As shown in Table 1, in Comparative Example, the maximum magnetic flux density of the impeder core was 0.62 T, a value far exceeding the saturation magnetic flux density of 0.45 T. In contrast, in Example 1, where the recessed area was formed in the range from 50 mm upstream of the induction coil with high magnetic flux density to 250 mm toward the welding point side and the impeder was installed in the recessed area, the maximum magnetic flux density of the impeder core was 0.43 T, which was the saturation magnetic flux density of the impeder core or less.

Furthermore, in Example 2, where the recessed area was formed up to the downstream end portion of the impeder core, the maximum magnetic flux density was 0.42 T, which was the saturation magnetic flux density of the impeder core or less. On the other hand, while only a small amount of magnetic flux entered the mandrel when the mandrel was covered with the impeder as in Example 1, the magnetic flux directly entered the mandrel, and the mandrel generated heat because the impeder was eliminated in Example 2, resulting in a 12% increase in the total heat generation amount ratio. However, although the heat generation amount increased, it was not to a level of damaging the mandrel, and the magnetic flux density of the impeder became lower, enabling stable production.

In contrast, in the case of Example 3 where the electromagnetic shielding material made of copper mesh was provided on the exposed mandrel, the maximum magnetic flux density of the impeder core was 0.42 T, which was equivalent to that of Example 2, and the total heat generation amount ratio was suppressed to the same level as that of Example 1.

As can be seen from the above results, it is possible to attenuate the magnetic flux entering the impeder core and to reduce the magnetic flux density by providing the recessed area at the impeder core, namely, by increasing the separation distances from the induction coil as the magnetic flux generation source and from the lower end of the opening.

While preferred embodiments of the present invention have been described in detail with reference to the attached drawings, the present invention is not limited to such examples. It is clear that a person having ordinary knowledge in the technical field to which the present invention belongs can conceive of various changed examples and modified examples within the scope of the technical idea described in the claims, and it is understood that these also naturally belong to the technical scope of the present invention.

The embodiments disclosed herein are in all respects illustrative and not restrictive. The above embodiments may be omitted, substituted, or modified in various forms without departing from the scope of the appended claims, the configurations within the technical scope of the invention as described below, and the main purpose thereof. For example, the components of the above embodiments may be arbitrarily combined to the extent that the effects thereof are not impaired. In addition, from such arbitrary combination, the action and effect for each of the components for the combination will naturally be obtained, as well as other actions and other effects that are obvious to those skilled in the art from the description herein.

The effects described herein are only illustrative or exemplary, and not restrictive. In other words, the technology according to the present invention can produce other effects that are obvious to those skilled in the art from the description herein, either together with or in place of the above effects.

INDUSTRIAL APPLICABILITY

The present invention is useful for an electric-resistance welded pipe welding device that bends a metal band plate into a cylindrical shape and performs induction heating on the metal band plate while running and welds both end face portions of the metal band plate together by current induced in the metal band plate. The electric-resistance welded pipes manufactured in this way are used, for example, as oil well pipes, pipes for motorcycles, four-wheeled vehicles, and other pipes for which weight reduction is required.

EXPLANATION OF CODES

| | |
|---|---|
| 1 | impedance device |
| 2 | impeder core |
| 3 | mandrel |
| 3a | core material |
| 3b | through hole |
| 3c | lattice |
| 3d | slit |
| 4 | roller |
| 5 | cutting tool |
| 6 | impeder case |
| 7 | electric-resistance welded pipe manufacturing device |
| 8 | induction coil |
| 9 | open pipe |
| 9a | opening |
| 9b | end portion |
| 100 | electric-resistance welded pipe manufacturing device |
| 101 | forming roll group |
| 103 | squeeze roll |
| 110 | impedance device |
| 111 | impeder core |

**EP 4 647 201 A1**

| | |
|---|---|
| 113 | recessed area |
| 115 | sealing material |
| 120 | electromagnetic shielding material |
| 200 | electric-resistance welded pipe manufacturing device |
| 210 | impedance device |
| 211 | impeder core |
| 213 | recessed area |
| V | welding point |
| X1 | magnetic-flux affected range |
| X2 | direct-below range |
| Y 1 | width |
| Y2 | opening width |

**Claims**

1. A mandrel equipped with an impedance device for manufacturing an electric-resistance welded pipe comprising:

   the impedance device that has an impeder core made of a magnetic material, and
   the mandrel that is located inside the impeder core, serves as a support member of the impeder core, and is extended in a predetermined direction, wherein
   a recessed area that is formed at a part of the impeder core within a predetermined size along an extending direction of the mandrel, and
   a size of the recessed area in a direction orthogonal to the extending direction is 10 mm or more and 1/3 or less of an outer circumferential length of the mandrel.

2. The mandrel according to claim 1, wherein
   a length of the recessed area in the extending direction is 100 mm or more and an entire length of the impeder core or less.

3. The mandrel according to claim 1 or 2, wherein

   the impedance device further has a hollow impeder case provided outside the impeder core to have a void between the impeder case and the impeder core, and
   cooling water is passed through the hollow portion of the impeder case.

4. The mandrel according to any one of claims 1 to 3, wherein
   the recessed area is formed by at least an upper part of the impedance device is curved downward.

5. The mandrel according to any one of claims 1 to 3, wherein
   the recessed area is a cutout portion in which at least a part of the impeder core is removed.

6. The mandrel according to claim 5, wherein
   a surface of the mandrel is exposed at a bottom part of the recessed area.

7. The mandrel according to claim 6, wherein
   an electromagnetic shielding material is provided at the surface of the exposed mandrel.

8. The mandrel according to claim 7, wherein
   the electromagnetic shielding material is copper mesh.

9. The mandrel according to any one of claims 6 to 8, wherein
   slits extending in a running direction are formed at the exposed portion of the mandrel at the bottom part of the recessed area.

10. The mandrel according to claim 9, wherein
    a width of a metal portion where the slits are formed is smaller than a penetration depth of the induced current.

11. The mandrel according to claim 9 or 10, wherein

cooling water is flowed through the mandrel, and
a sealing member is provided at the portion of the mandrel where the slits are formed.

12. The mandrel according to any one of claims 1 to 11, wherein
a through hole penetrating in a vertical direction is formed at the mandrel directly below at least a part or all of the recessed area.

13. The mandrel according to any one of claims 1 to 12, wherein
the impeder core is provided only at an upper half of an outer circumference of the mandrel.

14. An electric-resistance welded pipe manufacturing device, which includes a forming roll group that forms a desired electric-resistance welded pipe shape, an induction coil that generates an induced current, and a mandrel for manufacturing an electric-resistance welded pipe extended in a predetermined direction, the device comprising:

an impedance device, which has an impeder core made of a magnetic material, that is provided on a part of the mandrel; and
a recessed area that is formed at a part of the impeder core within a predetermined size along an extending direction of the mandrel, wherein
a size of the recessed area in the extending direction is (a width of the induction coil + 100 mm) or more and an entire length of the impeder core or less, and
a size of the recessed area in a direction orthogonal to the extending direction is 10 mm or more and 1/3 of an outer circumferential length of the mandrel or less.

15. A method for manufacturing an electric-resistance welded pipe, in which end portions of an open pipe that is bent into a cylindrical shape while being conveyed in a predetermined running direction are melted by an induced current and then the end portions are butted and electric-resistance welded together, the method comprising:
disposing the mandrel according to any one of claims 1 to 13 inside the open pipe so that a recessed area faces the end portion of the open pipe and at least a part of a disposed position of an induction coil for generating the induced current is included in the recessed area in an extending direction of the mandrel.

16. The method for manufacturing the electric-resistance welded pipe according to claim 15, wherein

in a cross-section when the open pipe, the impedance device, and the mandrel are cut in a radial direction of the open pipe,
a separation distance between an upper end of the impedance device and a lower end of the end portion of the open pipe in the recessed area is larger than a separation distance between the upper end of the impedance device and the lower end of the end portion of the open pipe at an upstream side of the recessed area in the running direction.

17. The method for manufacturing the electric-resistance welded pipe according to claim 15 or 16, wherein
a length of the recessed area in the extending direction is a length that can include a range from a position 50 mm upstream of the induction coil to a position 50 mm downstream of the induction coil, based on a position directly below the induction coil that generates the induced current.

**FIG. 1A**

INSERTION
DIRECTION

**FIG. 1B**

**FIG. 2**

**FIG. 3**

**FIG. 4A**

INSERTION
DIRECTION

L1

110

A

113

5

4

6

222

3

A

y

z ⊙ x

**FIG. 4B**

L2

113

6

111

y

⊙ x

z

3a

3

COOLING WATER
FLOW PATH

FIG. 5

METAL BAND PLATE

100

101

103

103

9

8

R

EP 4 647 201 A1

19

**FIG. 6**

**FIG. 7**

**FIG. 8**

**FIG. 9**

**FIG. 10**

**FIG. 11**

**FIG. 12**

**FIG. 13**

**FIG. 14**

**FIG. 15A**

FIG. 15B

FIG. 15C

**FIG. 16**

**FIG. 17**

FIG. 18

RUNNING DIRECTION

MANDREL

INDUCTION COIL

CUTTING TOOL

METAL BAND PLATE

ROLLER

MANDREL

WELD BEAD

A-A CROSS-SECTION

B-B CROSS-SECTION

C-C CROSS-SECTION

D-D CROSS-SECTION

E-E CROSS-SECTION

EP 4 647 201 A1

## INTERNATIONAL SEARCH REPORT

International application No.

**PCT/JP2023/046526**

| A. | CLASSIFICATION OF SUBJECT MATTER |
|---|---|

*B23K 13/08*(2006.01)i; *B23K 13/00*(2006.01)i
FI: B23K13/08 520; B23K13/00 A

According to International Patent Classification (IPC) or to both national classification and IPC

| B. | FIELDS SEARCHED |
|---|---|

Minimum documentation searched (classification system followed by classification symbols)

B23K13/08; B23K13/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | JP 58-221681 A (SUMITOMO METAL INDUSTRIES, LTD.) 23 December 1983 (1983-12-23) p. 3, upper right column, fig. 1-2 | 1-6, 13-15, 17 |
| A | | 7-12, 16 |
| Y | Microfilm of the specification and drawings annexed to the request of Japanese Utility Model Application No. 112027/1981 (Laid-open No. 18690/1983) (TOKYO DENKI KAGAKU KOGYO K.K.) 04 February 1983 (1983-02-04), pp. 1-4, fig. 1, 3 | 1-6, 13-15, 17 |
| A | | 7-12, 16 |
| Y | Microfilm of the specification and drawings annexed to the request of Japanese Utility Model Application No. 123428/1975 (Laid-open No. 36721/1977) (NISSHIN STEEL CO., LTD.) 15 March 1977 (1977-03-15), fig. 1, 3-4 | 13, 15, 17 |
| A | JP 2007-210026 A (TDK CORPORATION) 23 August 2007 (2007-08-23) claims 1-4, fig. 1-9 | 1-17 |

☑ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **20 February 2024** | **12 March 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**

International application No.

**PCT/JP2023/046526**

### C. DOCUMENTS CONSIDERED TO BE RELEVANT

| Category* | Citation of document, with indication, where appropriate, of the relevant passages | Relevant to claim No. |
|---|---|---|
| A | Microfilm of the specification and drawings annexed to the request of Japanese Utility Model Application No. 186937/1985 (Laid-open No. 96984/1987) (SUMITOMO METAL INDUSTRIES, LTD.) 20 June 1987 (1987-06-20), claim 1, fig. 1-4 | 1-17 |

Form PCT/ISA/210 (second sheet) (July 2022)

## INTERNATIONAL SEARCH REPORT
### Information on patent family members

International application No.

**PCT/JP2023/046526**

| Patent document cited in search report | | | Publication date (day/month/year) | Patent family member(s) | Publication date (day/month/year) |
|---|---|---|---|---|---|
| JP | 58-221681 | A | 23 December 1983 | (Family: none) | |
| JP | 58-18690 | U1 | 04 February 1983 | (Family: none) | |
| JP | 52-36721 | U1 | 15 March 1977 | (Family: none) | |
| JP | 2007-210026 | A | 23 August 2007 | (Family: none) | |
| JP | 62-96984 | U1 | 20 June 1987 | (Family: none) | |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 59008869 U

- JP 2001062572 A